# EUROPEAN PATENT SPECIFICATION

(11) **EP 4 028 456 B1**
(45) Date of publication and mention of the grant of the patent: **06.11.2024**
(21) Application number: 20767580.2
(22) Date of filing: 10.09.2020
(51) Int. Cl.: C08J 9/00, C08J 9/26, C08L 81/04, B01D 71/66

(54) **POROUS ARTICLES, PROCESSES FOR THEIR PREPARATION AND USES THEREOF**
PORÖSE ARTIKEL, VERFAHREN ZU DEREN HERSTELLUNG UND VERWENDUNGEN DAVON
ARTICLES POREUX, LEUR PROCÉDÉ DE PRÉPARATION ET LEURS UTILISATIONS

(30) Priority: 10.09.2019 US 201962898245 P; 12.11.2019 EP 19208586
(43) Date of publication of application: 20.07.2022
(73) Proprietor: Solvay Specialty Polymers USA, LLC, Alpharetta, Georgia 30005-3914 (US)
(72) Inventor: BRANHAM, Kelly D., Woodstock, GA 30188 (US); KOMER, Vida, Venetia, PA 15367 (US); TROTTER, Benjamin, Alpharetta, GA 30004 (US)
(74) Representative: Kraus & Lederer PartGmbB
(86) International application number: PCT/EP2020/075340
(87) International publication number: WO 2021/048286

(56) References cited:
- EP-A1- 1 746 125
- WO-A1-2018/065526
- WO-A1-94/17974

## Description

### RELATED APPLICATIONS

This application claims priorities of US provisional application 62/898,245 filed on September 10, 2019, and of EP patent application 19208586.8 filed on November 12, 2019.

### FIELD OF THE INVENTION

The present invention relates to polymer compositions for the preparation of porous article, notably microporous membranes or molded parts. More particularly, the present invention relates to a process of preparing a porous article from at least one polyphenylene sulfide (PPS) polymer with an additive and at least one reinforcing filler, followed by a step of shaping the article and contacting the article with water to dissolve the additive and create an interconnected pore network within the shaped article.

### BACKGROUND OF THE INVENTION

Porous polymeric membranes are used in a wide variety of applications. They can be prepared using different processes.

The phase inversion methods are currently the most commonly used ones. Phase inversion refers to a process of membrane formation where polymer solutions become set in a semi-solid gel phase by precipitation. In the Non-Solvent Induced Phase Separation (NIPS) process, a homogeneous polymeric solution (also referred to as "dope solution") containing a polymer, a suitable solvent and/or a co-solvent is typically processed by casting into a film and then brought to precipitation by contacting it with a non-solvent medium. In the Thermal Induced Phase Separation (TIPS) process, precipitation is obtained by decreasing the temperature of the polymeric solution. These methods use solvents, such as N-Methyl-2-pyrrolidone (NMP), N,N-dimethyl formamide (DMF), diethyl phthalate (DEP), dibutyl phthalate (DBP) or dioctyl phthalate (DOP). The use of solvents generates substantial environmental and disposal problems. There have been many active research efforts to replace the use of solvents with environmentally friendly alternatives.

Another method known as the template-leaching technique can be used to prepare porous membranes from polymers which do not dissolve in common organic solvents. In this technique, a homogeneous film is prepared from a mixture of membrane matrix material and a leachable component. The leachable component can be a soluble low molecular weight substance or even a macromolecular material such as poly(vinyl alcohol) (PVA) or polyethylene glycol) (PEG). After the film has been prepared, the leachable component is removed by a suitable chemical treatment, and a porous structure is formed as a result. One drawback of this method is the low thermal stability of PEG and PVA that degrades at temperatures above 300°C.

US 4,196,070 discloses a method of forming microporous fluorocarbon polymer sheet. The process comprises mixing an aqueous dispersion of polytetrafluoroethylene (PTFE) with metallic organic salt, forming wet sheet, concentrating, drying sintering and leaching the salt crystals.

US 2007/0232502 relates to resinous porous article and a lubricating oil which impregnates the resinous porous article. The resins include polyethylene, polyether ether ketone (PEEK) and polyamide. The lubricating oil is perfluoropolyether oil.

US 3,956,020 discloses a method of forming porous polymer article. The method comprises heating polyethylene, polypropylene or polyolefin, forming a composite body by incorporating salt, shaping the composite body, cooling it to the room temperature, forming a solid composite body, dissolving the salt and leaving the polymer as porous article.

GB 920,229 relates to the production of microporous olefinic polymers (mainly polyethylene and polypropylene polymers) using a water-soluble anionic surfactant.

WO 2018/065526 A1 relates to polymer composition for preparing porous article. The process of preparing a porous article from a blend of at least one semi-crystalline or amorphous polymer with an additive followed by shaping, contacting the article with water to dissolve the additive and create the article.

EP 1 746 125 A1 discloses a method of producing resinous porous article. The process comprises adding pore-forming substance to resin, molding, and extracting pore-forming substance with solvent, which dissolves pore-forming substance. This document describes dry mixing of the polymer and water-soluble additive, or alternatively water-soluble additive in a solvent that dissolves the water-soluble additive, followed by removal of the solvent (water), into a composition that can be molded. The average pore size obtained for porous membrane is 50 to 500 microns.

Some of the prior art references which use polytetrafluoroethylene (PTFE) have low tensile strength. A further problem with the method is the lack of uniform porosity of the resulting sheets. Some other methods, for example, use of extractable plasticizer, volatilization of a solvent, sintering or bonding with an adhesive, etc. but these methods fail to give the very uniform, ultrafine porous structure and ease of control obtained by present method. Additionally, when the conventional sliding material containing the lubricating oil is molded into the sliding member, the lubricating oil is generally decomposed.

There is still a need to provide porous articles, made of polymers, prepared by an environmentally friendly process, which does not use solvents such as NMP or DMF, or does not involve any radiation source. Another object of the present invention is to provide a simple and cost-effective process for preparing these porous articles. Another object of the present invention is to provide porous membrane with an average pore size of less than 5 micron (µm), preferably less than 1 micron.

The method for making porous articles according to the present invention essentially eliminates all of the drawbacks of the prior art processes. This process permits making of solid, robust, ultrafine porous articles having the porosity is up to about 60% and the pore size can be from about 0.01 micron to about 5.0 micron. The porous articles are made of at least one polyphenylene sulfide (PPS) polymer which provides excellent balance of properties such as exceptional mechanical strength, high temperature resistance, excellent dimensional stability, inherent flame resistance, good chemical resistance, exceptionally high modulus and creep resistance and electrical properties. Further, the porous articles of the present invention may comprise reinforcing fillers which improve tensile properties and make pores robust.

### SUMMARY OF THE INVENTION

An object of the present invention is to provide a polymer composition (C) suitable to prepare a porous polymer article, for example a membrane or hollow fibers.

According to the invention, the polymer compositions (C) of the present invention comprise at least one polyphenylene sulfide (PPS) polymer.

According to the invention, the polymer compositions (C) of the present invention comprise at least 28 wt. %, based on the total weight of the polymer composition (C), of the additive.

According to one embodiment, the polymer compositions (C) of the present invention comprise at least one reinforcing filler.

The present invention further relates to a method of forming a porous polymer membrane as defined in claim 9, to a porous polymer membrane as defined in claim 13, and to the use of the porous polymer membrane as defined in claims 13 and 14.

Another object of the present disclosure is to provide a simple and cost-effective process for the preparation of these porous articles, the process not using solvents such as NMP or DMF or not involving an irradiation source.

According to one embodiment, this process comprises a step consisting in processing or shaping the polymer composition into an article, for example by extrusion, and a step consisting in contacting the article with water so as to dissolve one of the polymer composition components, herein called "additive", thereby creating a pore network within the shaped article. The inventors have surprisingly found that certain additives, which are water-soluble, can be compounded homogeneously in various polymer compositions, notably semi-crystalline polymer compositions, withstanding harsh conditions that is to say notably not degrading at high temperatures (for example the ones used in the compounding). The homogeneous repartition of the additive within the polymer composition, along with an adjusted quantity of the same within the composition, offer the possibility to create an interconnected pore network into the shaped article by a step consisting in dissolution into water.

According to some embodiments, the porous polymer membranes (M) are used in automotive, 5G telecommunication and medical/healthcare applications.

### DETAILED DESCRIPTION OF PREFERRED EMBODIMENTS

The present invention relates to a polymer composition (C) comprising at least one polyphenylene sulfide (PPS) polymer, at least 28 wt. %, based on the total weight of the polymer composition, of at least one additive and at least one reinforcing filler. This composition is used to prepare porous articles, for example microporous membranes or hollow fibers, to be used in a wide application spectrum covering filtration in general (microfiltration and ultrafiltration), food and dairy industries, wastewater treatment, hemodialysis, battery separators, reverse osmosis pretreatment, automotive, 5G telecommunication and medical/healthcare. More precisely, a homogenous article (e.g. a film or a membrane) is prepared from the mixture of the polyphenylene sulfide (PPS) polymer, the additive and the reinforcing filler. After the shaped article (e.g. a film or a membrane) has been prepared, the additive, which is water-soluble by nature, is removed from the shaped article by immersion into water. A porous structure presenting an interconnected pore network is formed as a result (e.g. a porous film or a porous membrane). The shaped porous articles obtained with these components, according to this process, have been shown not only to present a high porosity but also good mechanical properties and chemical resistance.

For the sake of clarity, throughout the present application:
- "melting temperature (Tm)" or "Tm" or "melting point" means the melting temperature measured by differential scanning calorimetry (DSC) according to ASTM D3418 at 20°C/min as described in details in the examples;
- the term "halogen" includes fluorine, chlorine, bromine, and iodine, unless indicated otherwise;
- the adjective "aromatic" denotes any mono- or polynuclear cyclic group (or moiety) having a number of π electrons equal to 4n+2, where n is 1 or any positive integer; an aromatic group (or moiety) can be an aryl and arylene group (or moiety).

### Polyphenylene sulfide (PPS) polymer

According to the invention, the polymer compositions (C) of the present invention comprise at least one polyphenylene sulfide (PPS) polymer.

Polyphenylene sulfide (PPS) is a semi-crystalline, high temperature engineering thermoplastic. Polyphenylene sulfide (PPS) polymer provides excellent balance of properties such as exceptional mechanical strength, high temperature resistance, excellent dimensional stability, inherent flame resistance, good chemical resistance, exceptionally high modulus and creep resistance and electrical properties. It further provides high modulus when reinforced. It meets green initiatives versus traditional materials (recyclability).

As used herein, a poly(*para*-phenylene sulfide) (PPS) denotes any polymer comprising at least 50 mol. % of recurring units (R_{PPS}) of formula (L) :

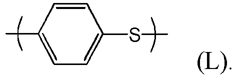

Preferably at least 60 mol. %, 70 mol. %, 80 mol. %, 90 mol. %, 95 mol. %, 99 mol. %, and most preferably all of the recurring units in the PPS are recurring units (R_{PPS}).

The highly stable chemical bonds of its molecular structure impart a remarkable degree of molecular stability toward both thermal degradation and chemical reactivity. The molecular structure also readily packs into a very thermally stable crystalline lattice, hence, PPS is a semi-crystalline polymer with a high crystalline melting point of 285 °C.

Generally, the polyphenylene sulfide (PPS) polymer in the polymer composition may have a weight average molecular weight (Mw) ranging from 10,000 g/mol to 150,000 g/mol, preferably from 20,000 g/mol to 100,000 g/mol or from 40,000 to 95,000 g/mol. The weight average molecular weight can be determined by gel permeation chromatography using ASTM D5296 with polystyrene standards.

PPS is manufactured and sold under the trade name Ryton^{®} PPS by Solvay Specialty Polymers USA, LLC. Excellent results were obtained when the polymer used to prepare porous membrane was PPS.

### Additive

The polymer composition (C) of the present invention also comprises an additive of formula (I) :

Rₐ-Ar-X_{b} (I)

where
- Ar is an aromatic moiety and is selected from the group consisting of substituted or unsubstituted, aromatic monocyclic or polycyclic group having 5 to 18 carbon atoms,
- each of R, identical or different from each other, is selected from the group consisting of a halogen, an hydroxyl, a C1-C18 aliphatic group, a C1-C18 cycloaliphatic group and a C1-C18 aromatic;
- a is zero or an integer ranging from 1 to 5, preferably a is zero or 1;
- X is (COO⁻), (M^{p+})_{1/p} in which M^{p+} is a metal cation of p valence;
- b is an integer ranging from 1 to 4, preferably b is 1 or 2.

One of the essential features of the present invention is to use an additive in the form of a salt of carboxylic acid, more precisely a carboxylate -COO⁻. The additive may comprise 1 to 4 groups X, identical or different, where X is (COO⁻), (M^{p+})_{1/p} in which M^{p+} is a metal cation of p valence.

According to an embodiment, the additive of formula (I) is such that each of R, identical or different from each other, is selected from the group consisting of a halogen, an hydroxyl and a C1-C3 aliphatic group (i.e. a methyl, an ethyl or a propyl).

According to an embodiment, M is selected from the group consisting of sodium, potassium, calcium, lithium, magnesium, silver, aluminium, zinc, nickel, copper, palladium, iron, and cesium. Preferably M is sodium or potassium.

M can alternatively be specifically chosen among alkali metals (IA of the periodic table) or alkaline earths metal (IIA of the periodic table).

According to an embodiment, X is a sodium and/or a potassium salt of carboxylic acid.

The additive used in the present invention is by nature water-soluble.

The additive may also be said to be extractable, as defined below.

According to one embodiment of the invention, the aromatic moiety of formula (I) can be selected from the group consisting of: 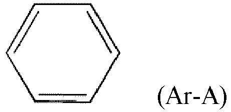 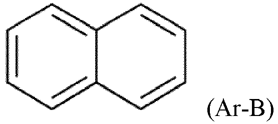 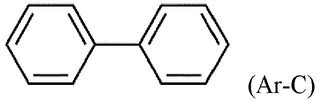 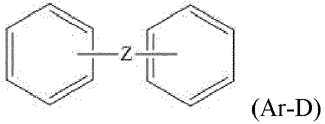 wherein Z is a divalent moiety and is selected from the group consisting of -SO₂-, -CO- and alkylenes of 1 to 6 carbon atoms. Z can in particular be a -C(CH₃)₂- or -CₙH₂ₙ- with n being an integer from 1 to 6, for example -CH₂- or -CH₂-CH₂-.

According to one embodiment of the invention, the additive of formula (I) is such that each aromatic moiety of formula (I), for example (Ar-A) to (Ar-D) comprises 1,2 or 3 groups X, identical or different, where X is (COO⁻), (M^{p+})_{1/p} in which M^{p+} is a metal cation of p valence.

According to one embodiment of the invention, the additive of formula (I) is such that each aromatic moiety of formula (I) comprises 1 or 2 groups X, identical or different, where X is (COO⁻), (M^{p+})_{1/p} in which M^{p+} is a metal cation of p valence.

According to one embodiment, the additive is according to formula (II): 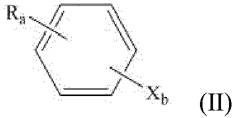 wherein:
- each of R, identical or different from each other, is selected from the group consisting of a halogen, an hydroxyl, a C1-C18 aliphatic group, a C1-C18 cycloaliphatic group and a C1-C18 aromatic;
- a is zero or an integer ranging from 1 to 5;
- X is (COO⁻), (M^{p+})_{1/p} in which M^{p+} is a metal cation of p valence;
- b is each of either 1 or 2.

According to one further embodiment of the invention, the additive of formula (I) or (II) is such that a is 0, 1 or 2.

According to another embodiment, a is zero so that the phenylene moieties have no other substituents than the sulfonate or carboxylate functions.

According to another embodiment of the invention, the additive salt is alkyl or aryl benzoate, methylbenzoate, ethylbenzoate, propylbenzoate and butylbenzoate.

According to another embodiment of the invention, the additive is selected from the group consisting of sodium or potassium alkyl or aryl benzoate, sodium or potassium methyl benzoate, sodium or potassium ethylbenzoate, sodium or potassium propylbenzoate and sodium or potassium butylbenzoate.

The additive is present in the composition of the invention in a quantity of at least 28 wt. %, based on the total weight of the composition.

According to another embodiment of the invention, the composition comprises between about 28 and about 80 wt. % of the additive, for example between about 30 and about 75 wt. % or between about 35 and about 70 wt. %.

According to an embodiment of the present invention, the additive has a melting temperature Tma (°C) of at least 150°C, for example of at least 170°C, at least 180°C, at least 190°C, or at least 200 °C, as for example measured by differential scanning calorimetry (DSC) according to ASTM D3418.

According to an embodiment of the invention, the polymer composition (C) comprises:
- at least one polyphenylene sulfide (PPS) polymer;
- at least 28 wt. %, by weight of the polymer composition (C), of at least one additive as described above, for example selected in the group consisting of sodium or potassium benzoate, sodium or potassium methyl benzoate, sodium or potassium ethylbenzoate, sodium or potassium propylbenzoate and sodium or potassium butylbenzoate, preferably sodium or potassium benzoate; and
- at least one reinforcing filler.

### Reinforcing filler

The polymer composition optionally includes at least one reinforcing filler such as a fibrous or particulate filler. A fibrous reinforcing filler is a material having length, width and thickness, wherein the average length is significantly larger than both the width and thickness. Preferably, such a material has an aspect ratio, defined as the average ratio between the length and the smallest of the width and thickness of at least 5. Preferably, the aspect ratio of the reinforcing fibers is at least 10, more preferably at least 20, still more preferably at least 50. The particulate fillers have an aspect ratio of at most 5, preferably at most 2.

Preferably, the reinforcing filler is selected from mineral fillers, such as talc, mica, kaolin, calcium carbonate, calcium silicate, magnesium carbonate, boron nitride; glass fibers; carbon fibers, boron carbide fibers; wollastonite; silicon carbide fibers; boron fibers, graphene, carbon nanotubes (CNT), basalt fibers and the like. Most preferably, the reinforcing filler is glass fiber, preferably chopped glass fiber, or carbon fiber, preferably chopped carbon fibers.

Glass fibers are silica-based glass compounds that contain several metal oxides which can be tailored to create different types of glass. The main oxide is silica in the form of silica sand; the other oxides such as calcium, sodium and aluminum are incorporated to reduce the melting temperature and impede crystallization. Glass fibers have a round cross-section or a non-circular cross-section (so called "flat glass fibers"), including oval, elliptical or rectangular. The glass fibers may be added as endless fibers or as chopped glass fibers. The glass fibers have generally an equivalent diameter of 5 to 20 preferably of 5 to 15 µm and more preferably of 5 to 10 µm. All glass fiber types, such as A, C, D, E, M, S, R, T glass fibers (as described in chapter 5.2.3, pages 43-48 of Additives for Plastics Handbook, 2nd ed, John Murphy), or any mixtures thereof or mixtures thereof may be used. For example, R, S and T glass fibers are high modulus glass fibers that have typically an elastic modulus of at least 76, preferably at least 78, more preferably at least 80, and most preferably at least 82 GPa as measured according to ASTM D2343.

E, R, S and T glass fibers are well known in the art. They are notably described in Fiberglass and Glass Technology, Wallenberger, Frederick T.; Bingham, Paul A. (Eds.), 2010, XIV, chapter 5, pages 197 - 225. R, S and T glass fibers are composed essentially of oxides of silicon, aluminum and magnesium. In particular, those glass fibers comprise typically from 62-75 wt. % of SiO₂, from 16-28 wt. % of Al₂O₃ and from 5-14 wt. % of MgO. Different than the regular E-glass fibers widely used in polymer compositions, R, S and T glass fibers comprise less than 10 wt. % of CaO.

The fibrous filler, in particular the glass fibers, may have a cross-sectional longest diameter of at least 15 µm, preferably at least 20 µm, more preferably at least 22 µm, still more preferably at least 25 µm. It is advantageously of at most 40 µm, preferably at most 35 µm, more preferably at most 32 µm, still more preferably at most 30 µm. Excellent results were obtained when the cross-sectional longest diameter was in the range of 15 to 35 preferably of 20 to 30 µm and more preferably of 25 to 29 µm.

The fibrous filler, in particular the glass fibers may have a cross-sectional shortest diameter of at least 4 µm, preferably at least 5 µm, more preferably at least 6 µm, still more preferably at least 7 µm. It is advantageously of at most 25 µm, preferably at most 20 µm, more preferably at most 17 µm, still more preferably at most 15 □m. Excellent results were obtained when the cross-sectional shortest diameter was in the range of 5 to 20 preferably of 5 to 15 µm and more preferably of 7 to 11 µm.

The fibrous filler, in particular the glass fibers, may have an aspect ratio of at least 2, preferably at least 2.2, more preferably at least 2.4, still more preferably at least 3. The aspect ratio is defined as a ratio of the longest diameter in the cross-section of the glass fiber to the shortest diameter thereof. Also, the aspect ratio of the glass fibers is of at most 8, preferably at most 6, more preferably of at most 4. Excellent results were obtained when said ratio was of from about 2 to about 6, and preferably, from about 2.2 to about 4.

The shape of the cross-section of the glass fiber, its length, its cross-sectional diameter and its aspect ratio can be easily determined using optical microscopy.

The amount of the reinforcing filler may range in the case of particulate fillers, from 1 wt. % to 40 wt. %, preferably from 5 wt. % to 35 wt. % and most preferably from 10 wt. % to 30 wt. %, and in the case of fibrous fillers from 1 wt. % to 50 wt. %, preferably from 2 wt. % to 30 wt. %, and most preferably from 3 wt. % to 20 wt. % based on the total weight of the polymer composition. Preferably, the polymer composition includes about 10 to about 20 wt. %, most preferably about 15 wt. %, of glass or carbon fiber, most preferably glass fiber. In some embodiments, the polymer composition includes less than 10 wt.%, less than 5 wt.%, less than 1 wt.% of a fibrous filler, a particulate filler, or both. In some aspects, the polymer composition is free of a fibrous filler, a particulate filler, or both.

Basalt fibers are materials made from extremely fine fibers of basalt, which are composed of the minerals plagioclase, pyroxene, and olivine. They are similar to glass fibers, but having better physicomechanical properties than fiberglass, and being significantly cheaper than carbon fibers.

### Optional Components

In some embodiments, the polymer composition (C) includes titanium dioxide (TiO₂). The amount of titanium dioxide preferably ranges from 0 pph to about 25 pph, for example from about 0.1 pph to about 25 pph, for example from about 5 pph to about 20 pph. The amount of titanium dioxide (TiO₂) may be at most about 25 pph, preferably at most about 20 pph, preferably at most about 20 pph, preferably at most about 15 pph.

The polymer composition (C) may further optionally comprise additional components such as ultraviolet light stabilizers, heat stabilizers, antioxidants, pigments, processing aids, lubricants, flame retardants, plasticizers and/or conductivity additive such as carbon black and carbon nanofibrils.

The polymer composition (C) may further comprise water-soluble or dispersible polymer additives for benefit of processing and/or optimizing pore morphology and/or porosity. Examples of such polymers include: sulfo-polyesters, polyvinyl alcohol, polyethylene oxide, polyethylene oxide/propylene oxide copolymers, polyethylene imine, polyethyloxazoline, and polyvinylpyrrolidone, Such polymer additive are chosen to remain stable at the desired processing temperature and remain substantially extractable from the final articles by water.

The polymer composition (C) may further comprise flame retardants such as halogen and halogen free flame retardants.

### Articles (A) Comprising the Polymer Composition (C) and Applications

The polymer compositions (C) described herein can be used for the manufacture of a wide variety of formed articles. The term "article" in the present context is thus to be understood broadly. It refers to any type of article of manufacture which can be formed from a polymeric material and covers (a) the intermediate articles (or intermediate shaped articles), which are non-porous, and result directly from the step consisting in shaping the polymer composition of the invention into shaped articles, for example by injection molding, extrusion molding or 3D printing, and (b) the final articles (or final shaped articles), which are porous, and obtained from the intermediate articles which have, for example been immersed into water to dissolve the additive and create the pores. In this context, the additive is said to be water-soluble and/or extractable.

The polymer composition (C) may be used for thermal insulation or acoustic insulation, in variable shapes and sizes.

The polymer article (A) comprising the polymer composition (C) of the present invention may be used as a filter or as a membrane (e.g. microfiltration or ultrafiltration).

The article is preferably a membrane. Indeed, the polymer compositions described herein are very well suited for the production of membranes of this type. The term "membrane" is used herein in its usual meaning, that is to say it refers to a discrete, generally thin, interface that moderates the permeation of chemical species in contact with it. This interface may be molecularly homogeneous, that is, completely uniform in structure (dense membrane), or it may be chemically or physically heterogeneous, for example containing voids, holes or pores of finite dimensions (porous membrane). Membranes can be in the form of a flat sheet or in the form of tubes. Tubular membranes are classified based on their dimensions in tubular membranes having a diameter greater than 3 mm; capillary membranes, having a diameter comprised between 0.5 mm and 3 mm; and hollow fine fibers having a diameter of less than 0.5 mm. Flat sheet membranes are generally preferred when high fluxes are required whereas hollow fibers are particularly advantageous in applications where compact modules with high surface areas are required.

Porous membranes can be characterized by their pore sizes. In some embodiments, the average pore size of the porous polymer membrane is in the range from about 0.01 micron (µm) to about 5.0 micron, preferably from about 0.02 micron to about 2.0 micron, most preferably from about 0.05 micron to about 1.0 micron and even more preferably from about 0.07 micron to about 0.5 micron.

Porous membranes can be characterized by permeability measurements (volume of water which permeates through the membrane under given pressure conditions), porosity (ratio between the volume of voids and the total volume occupied by the membrane), pores features (average pore diameter, smallest pore diameter and largest pore diameter). They can also be characterized by their mechanical properties (tensile properties notably) and chemical resistance (after immersion in various solvents during a given amount of time).

The articles may be used singularly or in bundle arrays and form, for example, filter systems. The articles may be, for example, microfiltration membranes, ultrafiltration membranes or support for reverse osmosis.

These articles can be used in the separation of various materials. The potential utility of such a membrane article depends upon the membrane material, its structure (which depends upon its method of preparation), and the mode in which it is operated. For example, such articles can be used to permeate gases, e.g. oxygen or nitrogen, to separate solutes of suspended matter from solutions, e.g. soluble waste materials from blood (hemodialysis) or to separate dissolved molecules, colloids, and suspended solids from smaller molecules, e.g., in the manufacture of latex or cheese (ultrafiltration).

The inventors have shown that the porous membranes of the present invention present an improved porous structure.

Accordingly, the present invention also concerns the method of using the final shaped articles, for example porous membrane in filtration and purification processes, such as filtration of waste water, preparation of ultrapure water and in medical, pharmaceutical or food applications, including removal of microorganisms, dialyses and protein filtration.

In other words, the present invention concerns the use of the shaped articles for filtering or purifying liquids, such as filtering waste water, for preparing ultrapure water and in medical, pharmaceutical or food applications, including removal of microorganisms, dialyses and protein filtration.

The porosity of the membrane may range from 3 to 90 %, preferably from 5 to 80 % or from 20 to 70 %. For example, the membrane has a porosity of about 50 %, or about 60 %.

The pores may have an average diameter of at least 0.001 µm, of at least 0.005 µm, of at least 0.01 µm, of at least 0.1 µm, of at least 1 µm, of at least 10 µm and of at most 50 µm.

According to an embodiment, the porous polymer article, for example membrane, is used in automotive.

According to another embodiment, the porous polymer article, for example membrane, is used in 5G telecommunication.

According to another embodiment, the porous polymer article, for example membrane, is used for in medical/healthcare.

According to another embodiment, the porous polymer article, for example porous membrane according to the present invention, can be used for filtrating biologic solution (e.g. bioburden, virus, other large molecules) and/or buffer solutions (e.g. solutions that may contain small amount of solvents like DMSO or other polar aprotic solvents).

According to another embodiment of the present invention, the polymer composition (C) is used as a support material in processes for manufacturing a three-dimensional object with an extrusion-based additive manufacturing system, otherwise known also as fused filament fabrication technique. The polymer composition (C) used as support material in these 3D manufacturing methods is provided under the form of a filament. The filament may have a cylindrical or substantially cylindrical geometry, or may have a non-cylindrical geometry, such as a ribbon filament geometry; further, filament may have a hollow geometry, or may have a core-shell geometry, with the support material of the present invention being used to form either the core or the shell.

### Method of Manufacturing the Polymer Compositions (C), Articles (A) and Porous articles

The present disclosure also relates to the method of making the polymer composition (C) as described above, the method comprising melt-mixing at least the polyphenylene sulfide (PPS) polymer, the additive and the reinforcing filler.

More precisely, the polymer composition (C) can be manufactured by melt-mixing the at least one polyphenylene sulfide (PPS) polymer, with at least 28 wt. %, based on the total weight of the polymer composition (C), of the at least one additive of formula (I):

Rₐ-Ar-X_{b} (I)

where
- Ar is an aromatic moiety and is selected from the group consisting of substituted or unsubstituted, aromatic monocyclic or polycyclic group having 5 to 18 carbon atoms,
- each of R, identical or different from each other, is selected from the group consisting of a halogen, an hydroxyl, a C1-C18 aliphatic group, a C1-C18 cycloaliphatic group and a C1-C18 aromatic;
- a is zero or an integer ranging from 1 to 5;
- X is (COO⁻), (M^{p+})_{1/p} in which M^{p+} is a metal cation of p valence;
- b is an integer ranging from 1 to 4; and
optionally at least one reinforcing filler to provide a molten mixture.

The polymer compositions (C) described herein are advantageously provided in the form of pellets. These pellets may be used in injection molding or extrusion processes known in the art.

The polymer composition (C) can be made by methods well known to the person of ordinary skill in the art. For example, such methods include melt-mixing processes. In some preferred embodiments, the step of preparation of the polymer composition consists in melt-mixing the at least one polymer (P) with at least 28 wt. % of the at least one additive of formula (I). Melt-mixing processes are typically carried out by heating the thermoplastic polymer, along with the additive (I), above the melting temperature (Tm) of the thermoplastic polymer (P) thereby forming a melt of the blend. Melt compounding to yield pellets with the polymer(s), additive and optionally reinforcing fillers is advantageous. Such a process may be carried out by heating the polymer(s) (P) above the melting temperature (Tm) of the semi-crystalline polymer to form a melt of the blend polymer/additive (I) and/or above the glass transition temperature (Tg) of the amorphous polymer. In some embodiments, the processing temperature ranges from about 180-450°C, preferably from about 220-440°C, from about 260-430°C or from about 280-420°C. Preferably, the processing temperature is at least 15°C, preferably at least 30°C, at least 50°C, at least 80°C or at least 100°C greater than the melting temperature (Tm) of the semi-crystalline polymer (or of the highest polymer Tm in the polymer composition if the composition comprises several semi-crystalline polymers). Preferably, the processing temperature is at least 15°C, preferably at least 30°C or at least 50°C greater than the glass transition temperature (Tg) of the amorphous polymer (or of the highest polymer Tg in the polymer composition if the composition comprises several amorphous polymers). In case of a blend of an amorphous polymer and a semi-crystalline polymer, the melt-mixing process is carried out a temperature which the highest of the Tm or the Tg temperatures.

In some preferred embodiments, the melt-mixing consists in heating the semi-crystalline polymer (P), along with the additive (I) above its melting temperature (Tm) to form a melt of the blend polymer/additive. Even more preferably, the processing temperature is at least 15°C, preferably at least 20°C, at least 30°C, at least 40°C or at least 50°C greater than the melting temperature (Tm) of the semi-crystalline polymer.

The additive used in the context of the present invention is preferably in the form of a powder.

The process for the preparation of the composition can be carried out in a melt-mixing apparatus, for which any melt-mixing apparatus known to the one skilled in the art of preparing polymer compositions by melt mixing can be used. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of the polymer composition the constituting components for forming the composition are fed to the melt-mixing apparatus and melt-mixed in that apparatus. The constituting components may be fed simultaneously as a powder mixture or granule mixer, also known as dry-blend, or may be fed separately.

The order of combining the components during melt-mixing is not particularly limited. In one embodiment, the components can be mixed in a single batch, such that the desired amounts of each component are added together and subsequently mixed. In other embodiments, a first sub-set of components can be initially mixed together and one or more of the remaining components can be added to the mixture for further mixing. For clarity, the total desired amount of each component does not have to be mixed as a single quantity. For example, for one or more of the components, a partial quantity can be initially added and mixed and, subsequently, some or all of the remainder can be added and mixed.

The method of manufacturing the polymer composition (C) may comprise if needed several successive steps of melt-mixing or extrusion under different conditions.

The process itself, or each step of the process if relevant, may also comprise a step consisting in a cooling of the molten mixture.

The intermediate non-porous article (e.g. the shaped non-porous membrane or the shaped porous film) and the final porous article (e.g. the porous membrane or the porous film) according to the present invention are made from the polymer composition (C) using any suitable melt-processing method. In particular, they are made by injection molding, extrusion molding or 3D printing.

For this purpose, any standard molding technique can be used; standard techniques including shaping the polymer compositions in a molten/softened form can be advantageously applied, and include notably compression molding, extrusion molding, injection molding, transfer molding and the like. Dies may be used to shape the articles, for example a die having an annular orifice if the article is a hollow fiber membrane.

According to an embodiment of the present disclosure, the method of forming the polymer articles (intermediate non porous ones or final porous ones) comprises a step consisting in printing layers of a three-dimensional object from the provided polymer composition (C). According to this embodiment, the polymer article is in fact formed with an extrusion-based additive manufacturing system, otherwise known also as fused filament fabrication technique.

According to an embodiment of the present disclosure, the method of forming the polymer articles (intermediate non porous ones or final porous ones) comprises at least the step consisting in extruding the polymer composition (C) above described.

According to an embodiment of the present disclosure, the method of forming the porous polymer articles (e.g. porous membrane or porous hollow fiber) comprises additionally the step consisting in contacting the intermediate non porous article with water, for example by immersion into water or in a solution containing water. The water used to dissolve the water-soluble additive can be at a temperature varying for example between room temperature and 95°C. The time period needed to dissolve the polymer is variable. As an example, the time period can vary between 1 second and 2 hours, or from 5 seconds to 1 hour.

According to this embodiment, the additive can be said to be extractable, that-is-to-say able to be substantially extracted from the intermediate product by contact with water, for example immersion into water, the water being possibly heated up to 95°C, for a period of time up to 2 hours. "Substantially" in this context means that at least 80 wt. % of the additive is extracted from the intermediate product, for example at least 85 wt. %, at least 90 wt. % or at least 95 wt. %, so as to obtained the final shaped porous article.

Accordingly the present invention also concerns a method of forming a porous polymer membrane (M), comprising:
(i) preparing a polymer composition (C) as described above,
(ii) processing the polymer composition (C) into a membrane, for example extruding the polymer composition (C) into a flat membrane,
(iii) immersing the membrane into water.

The method of forming a porous polymer membrane (M) can comprise one or several optional steps. One optional step consists in stretching the membrane. This optional step can notably take place during step (iii). Another optional step consists in drying the membrane, for example in an oven.

The present invention is also directed to the porous polymer article (e.g. membrane or hollow tube) obtainable by this method.

The porous polymer article may contain up to 20 wt. % of the additive, for example up to 15 wt. % of the additive, up to 10 wt. % of the additive, up to 5 wt. % of the additive or less. According to an embodiment, it contains less than 1 wt. % of the additive.

The injection molded parts with fiber reinforcement provide significantly better mechanical strength (tensile strength, specific tensile strength) and modulus (specific modulus) over the porous non-reinforced counterparts. Addition of glass fibers can proportionally increase other bulk properties, such a dielectric constant and loss factor.

The polymer composition (C) may be generally processed by injection molding, if needed to an injection molded article for obtaining the part having the required final shape, without this diverging from the scope of the present invention.

The present invention is related to an article suitable for use in oil/gas recovery industries comprising at least one structural part made by injection molding a polyphenylene sulfide (PPS) polymer composition (C) wherein said injection molded structural part of said polyphenylene sulfide (PPS) polymer composition (C) is characterized by having improved mechanical properties, in particular high stiffness and high toughness, increased dielectric strength, dimensional stability and good aesthetical properties.

The articles according to the present invention may be coated or further treated.

Hence, the method, as above detailed, may additionally comprise at least one additional step comprising coating at least one metal onto at least a part of the surface of the said part.

The invention will be herein after illustrated in greater detail in the following section by means of non-limiting examples.

### EXAMPLES

Four working examples and two corresponding comparative examples are provided.

### Raw materials

1) PPS polymer : Ryton^{®} QC160N from Solvay Specialty Polymers USA, LLC.
2) Sodium benzoate, Fluid Energy, Telford, PA, under the product name: Micronized Sodium Benzoate (NaBz).
3) Glass fibers, T-779H, Nippon Electric Glass, Otsu, Japan.

### Example 1

A mixture of 42.75 weight percent (wt.%) Ryton^{®} QC-160, 55 wt.% Sodium benzoate, and 2.25 wt.% glass fiber (T-779H, Nippon Electric Glass, Otsu, Japan) was made by blending the components in a Coperion ZSK-26 twin screw extruder (Coperion GmbH, Stuttgart, Germany). This extruder had 12 barrel zones and a heated exit die operating at up to 450 °C and was capable of mass throughputs > 30 kg/hour. A side-feeder was used on the Coperion ZSK-26 to introduce the glass fibers into barrel 7. The actual melt temperature at the exit die was measured with a hand-held device and found to be 375 °C. ISO bars were made and property testing was performed. Data for these tests are shown in Tables 1 through 4. After extraction this sample had a glass fiber content of 5 wt.%.

### Example 2

A mixture of 40.5 weight percent (wt.%) Ryton^{®} QC-160N, 55 wt.% Sodium benzoate, and 4.5 wt.% glass fiber (ECS03T-T779, Nippon Electric Glass, Otsu, Japan) was made as described in Example 1. The actual melt temperature at the exit die was measured with a hand-held device and found to be 375 °C. ISO bars were made and property testing was performed as described in Example 1. Data for these tests are shown in Tables 1 through 4. After extraction this sample had a glass fiber content of 10 wt.%.

### Example 3

A mixture of 38.25 weight percent (wt.%) Ryton^{®} QC-160N, 55 wt.% Sodium benzoate, and 6.75 wt.% glass fiber (ECS03T-T779, Nippon Electric Glass, Otsu, Japan) was made as described in Example 1. The actual melt temperature at the exit die was measured with a hand-held device and found to be 410°C. ISO bars were made and property testing was performed as described in Example 1. Data for these tests are shown in Tables 1 through 4. After extraction this sample had a glass fiber content of 15 wt.%.

### Example 4

A mixture of 36 weight percent (wt.%) Ryton^{®} QC-160N, 55 wt.% Sodium benzoate, and 9 wt.% glass fiber (ECS03T-T779, Nippon Electric Glass, Otsu, Japan) was made as described in Example 1. The actual melt temperature at the exit die was measured with a hand-held device and found to be 400 °C. ISO bars were made and property testing was performed as described in Example 1. Data for these tests are shown in Tables 1 through 4. After extraction this sample had a glass fiber content of 20 wt.%.

A K-TronT-35 gravimetric feeder (Coperion GmbH, Stuttgart, Germany) was used to feed each material into the feeding section(s) of the extruder to yield the proper mass ratio of the components. The components were melted and mixed with screws designed to achieve a homogeneous melt composition. The actual melt temperature at the exit die was measured with a hand-held device and found to be 385 °C.

The melt stream was air cooled and fed into a Maag Primo 60E pelletizer (Maag Automatik GmbH, Stuttgart, Germany). Typical mass production rates were 10 to 20 kg per hour. The pellets were collected and kept in sealed plastic buckets until used for injection molding. ISO bars were fabricated by injection molding and tested according to ISO 527-2. Before testing the soluble component was extracted using hot water (80-95°C) for 24 hours and dried in a vacuum oven at 100 °C and < 20 in. Hg. Dimensional loss was measured at the neck width and thickness of the ISO bars and was found to be 1.0 and 2.5%, respectively. Percent (%) porosity was calculated gravimetrically for these samples. These results are shown in Table 1.

Mercury Intrusion testing was performed by Particle Testing Authority (Norcross, GA). Data for porosity, bulk density and pore size, Dp (pore size at maximum incremental mercury intrusion), are shown in Table 1.

**Table 1**

| **Example** | **Additive** | **Target Additive %** | **Glass Fiber %** | **Gravimetric Porosity %** | **Porosity % (Hg intr.)** | **Bulk density** (**g/cc)** | **Pore Diameter (Dp) (µm)** |
|---|---|---|---|---|---|---|---|
| Example 1 | NaBz | 55 | 5 | 51.3 | 50.9 | 0.712 | 0.07 |
| Example 2 | NaBz | 55 | 10 | 50.6 | 54.3 | 0.641 | 0.08 |
| Example 3 | NaBz | 55 | 15 | 52.3 | 55.5 | 0.634 | 0.08 |
| Example 4 | NaBz | 55 | 20 | 51.2 | 53.5 | 0.726 | 0.09 |

Tensile testing was performed as referenced above and tensile strength and modulus are given in Table 2. Specific tensile strength and modulus were calculated using the bulk density and are shown in Table 2.

**Table 2**

| **Ex.** | **GF %** | **Grav. Porosity %** | **Porosity % (Hg intr.)** | **Bulk density (g/cc)** | **Modulus (MPa)** | **Specific Modulus (MPa/(g/cc))** | **Tensile Strength (MPa)** | **Specific Tensile Strength (Mpa/(g/cc))** |
|---|---|---|---|---|---|---|---|---|
| Ex. 1 | 5 | 51.3 | 50.9 | 0.712 | 1810 | 2541 | 26.8 | 37.6 |
| Ex. 2 | 10 | 50.6 | 54.3 | 0.641 | 2150 | 3356 | 27.2 | 42.5 |
| Ex. 3 | 15 | 52.3 | 55.5 | 0.634 | 2450 | 3867 | 27.5 | 43.4 |
| Ex. 4 | 20 | 51.2 | 53.5 | 0.726 | 2810 | 3869 | 28.9 | 39.8 |

Dielectric constant and dissipation factor were measured at 2.4 GHz. using the guidelines of ASTM D2520, Method B - Resonant Cavity Perturbation Technique by Electronics Consulting Laboratories (Red Lion, PA). Dielectric constant and dissipation factor were measured on porous membranes and these porous membranes are used for 5G application. The presence of voids containing air which has a lower dielectric constant and loss factor results in systemic values of dielectric properties that are a composite of air and the plastic in the dielectric gap between two electrodes. Thus, lower dielectric property (Dk, Df) for the porous material versus the solid materials are obtained. The dielectric properties are shown in Table 3.

**Table 3 Dielectric properties**

| **Example** | **Gravimetric Porosity %** | **Glass Fiber %** | **Dielctric Constant (Dk)** | **Dielectric Loss Factor (DF)** |
|---|---|---|---|---|
| Example 1 | 51.3 | 5 | 2.11 | 0.0021 |
| Example 2 | 50.6 | 10 | 2.14 | 0.00229 |
| Example 3 | 52.3 | 15 | 2.15 | 0.00218 |
| Example 4 | 51.2 | 20 | 2.19 | 0.00243 |

Thermal conductivities (K) measurements were made on a Hot Disk^{®} (Gothenburg, SE) at 23 °C using a Kapton sensor. Data for the Thermal Conductivity of these samples, K, are shown in Table 4.

**Table 4: Thermal conductivity**

| **Example** | **Details** | **K (W/m k)** |
|---|---|---|
| Example 1 | 5% GF / 51.3% Porosity | 0.1 |
| Example 2 | 10% GF / 50.6% Porosity | 0.1 |
| Example 3 | 15% GF / 52.3% Porosity | 0.1 |
| Example 4 | 20% GF / 51.2% Porosity | 0.1 |

### Comparative Example 1

A mixture of 40 weight percent (wt.%) Ryton^{®} PPS, QC-160N and 60 wt.%, sodium benzoate (Fluid Energy, Telford, PA, under the product name: Micronized Sodium Benzoate) was made by blending the components in a Coperion ZSK-26 twin screw extruder (Coperion GmbH, Stuttgart, Germany). This extruder had 12 barrel zones and a heated exit die operating at up to 450 °C and was capable of mass throughputs > 30 kg/hour. The barrel profile shown below was employed:

| **Barrel#** | 1 | 2 | 3 | 4 | 5 | 6 | 7 | 3 | 9 | 10 | 11 | 12 | Die |
|---|---|---|---|---|---|---|---|---|---|---|---|---|---|
| **Set Point (°C)** | - | 270 | 230 | 280 | 280 | 290 | 290 | 300 | 300 | 300 | 300 | 300 | 300 |

The comparative example 1 does not use glass fibers. Gravimetric porosity, porosity (Hg intrusion), bulk density and pore diameter are shown in Table C1. Bulk density is lower and pore diameter is higher in comparative example 1 when glass fibers were not used, indicating that fine pore structure was achieved when using glass fibers.

**Table C1**

| **Example** | **Additive** | **Target Additive %** | **Glass Fiber %** | **Gravimetric Porosity %** | **Porosity % (Hg intr.)** | **Bulk density (g/cc)** | **Pore Diameter (Dp) (µm)** |
|---|---|---|---|---|---|---|---|
| Comp. Ex. 1 | NaBz | 60 | 0 | 58.1 | 56.2 | 0.608 | 0.1 |

Modulus, specific modulus, tensile strength, and specific tensile strength are shown in Table C2. Modulus, specific modulus, tensile strength, and specific tensile strength are lower in comparative example 1 when glass fibers were not used.

**Table C2**

| **Ex.** | **GF %** | **Modulus (MPa)** | **Specific Modulus (MPa/(g/cc))** | **Tensile Strength (MPa)** | **Specific Tensile Strength (Mpa/(g/cc))** |
|---|---|---|---|---|---|
| Comp. Ex. 1 | 0 | 1310 | 2154 | 20.6 | 33.9 |

Dielectric constant, dielectric loss factor and thermal conductivity are shown in Table C3. Dielectric constant, dielectric loss factor and thermal conductivity are lower in comparative example 1 when glass fibers were not used.

**Table C3**

| **Example** | **Glass Fiber %** | **Dielctric Constant (Dk)** | **Dielectric Loss Factor (DF)** | **K (W/m k)** |
|---|---|---|---|---|
| Comp. Ex. 1 | 0 | 1.95 | 0.00145 | 0.09 |

### Comparative Example 2

A mixture of 45 wt.% Radilon^{®} S24E Polyamide 6 and 55 wt.% Sodium benzoate was made as described in Comparative Example 1. The barrel profile shown below was employed:

| **Barrel#** | 1 | 2 | 3 | 4 | 5 | 6 | 7 | a | 9 | 10 | 11 | 12 | Die |
|---|---|---|---|---|---|---|---|---|---|---|---|---|---|
| **Set Point (°C)** | - | 170 | 210 | 220 | 220 | 220 | 220 | 220 | 220 | 220 | 220 | 220 | 240 |

The actual melt temperature at the exit die was measured with a hand-held device and found to be 250 °C. ISO bars were made and extraction in hot water was performed as described in Example 1. During extraction, the samples shrunk significantly. Dimensional loss was measured at the neck width and thickness of the ISO bars and was found to be 19 and 29%, respectively. Mercury as performed as described in Example 1 and data for these tests are shown in Table C4. The dimensional loss indicates that the samples have lost porosity by shrinking, even though the gravimetric estimate of porosity is high. This is supported by the mercury intrusion data that indicates low porosity and high densities relative to other examples in this work, as well a shift in pore size, Dp, to a bimodal distribution of sizes. The lower values likely indicate collapsed pores. The larger values may result from defects cause by shrinkage, such as delamination of a skin layer of the bar surface from the bulk of the sample.

**Table C4**

| **Sample** | **Additive** | **Target Additive %** | **Gravimetric Porosity %** | **Porosity % (Hg intr.)** | **Bulk density (g/cc)** | **Dp (µm)** |
|---|---|---|---|---|---|---|
| Comp. Ex. 2 | NaBz | 55 | 52.6 | 9 | 1.09 | <0.01 (major), 5.0 (minor) |

Further, the method for the manufacture of the above described article, includes the machining of an injection molded standard shaped structural part in a part having any type of size and shape. Non limiting examples of said standard shaped structural part include notably a plate, a rod, a slab, a sheet, a film and the like. Said standard shaped structural parts are obtained by injection molding of the polymer composition (C).

## Claims

1. A polymer composition (C) comprising:
- at least one polyphenylene sulfide (PPS);
- at least 28 wt. %, based on the total weight of the polymer composition (C), of at least one additive of formula (I):
Rₐ-Ar-X_{b} (I)
where
- Ar is an aromatic moiety and is selected from the group consisting of substituted or unsubstituted, aromatic monocyclic or polycyclic group having 5 to 18 carbon atoms;
- each of R, identical or different from each other, is selected from the group consisting of a halogen, an hydroxyl, a C1-C18 aliphatic group, a C1-C18 cycloaliphatic group and a C1-C18 aromatic;
- a is zero or an integer ranging from 1 to 5;
- X is (COO⁻), (M^{p+})_{1/p} in which M^{p+} is a metal cation of p valence;
- b is an integer ranging from 1 to 4;
- at least one reinforcing filler; and
- the at least one additive of formula (I) is water soluble.

2. The polymer composition (C) of claim 1, wherein Ar in formula (I) is selected from the group consisting of: 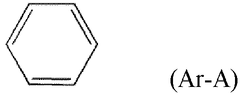 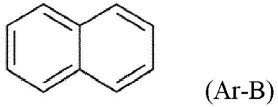 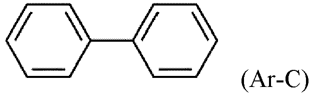 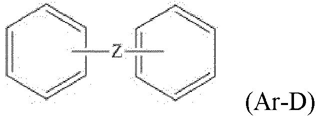 wherein Z is a divalent moiety and is selected from the group consisting of -SO₂-, -CO- and alkylenes of 1 to 6 carbon atoms.

3. The polymer composition (C) of any one of claims 1 to 2, wherein the additive is according to formula (II): 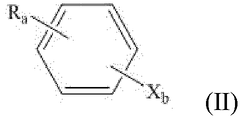 where
- each of R, identical or different from each other, is selected from the group consisting of a halogen, an hydroxyl, a C1-C18 aliphatic group, a C1-C18 cycloaliphatic 5 group and a C1-C18 aromatic;
- a is zero or an integer ranging from 1 to 5;
- X is (COO⁻), (M^{p+})_{1/p} in which M^{p+} is a metal cation of p valence; and
- b is each of either 1 or 2.

4. The polymer composition (C) of any one of claims 1 to 3, wherein the additive salt is selected from the group consisting of benzoate, methylbenzoate, ethylbenzoate, propylbenzoate and butylbenzoate.

5. The polymer composition (C) of any one of claims 1 to 4, comprising between 30 wt. % and 70 wt. % of the additive.

6. The polymer composition (C) of any one of claims 1 to 5, wherein the reinforcing filler is a fibrous filler and the polymer composition includes the fibrous filler in the amount ranging from 5 wt. % to 50 wt. %, based on the total weight of the polymer composition.

7. The polymer composition (C) of any one of claims 1 to 6, wherein the reinforcing filler is selected from the group consisting of glass fibers, carbon fibers and basalt fibers.

8. A polymer article (A) comprising the polymer composition (C) of any one of claims 1 to 7.

9. A method of forming a porous polymer membrane (M), comprising:
(i) preparing a polymer composition (C) according to any one of claims 1 to 7,
(ii) processing the polymer composition (C) into a membrane,
(iii) immersing the membrane into water.

10. The method of claim 9, wherein step (i) consists in melt-mixing the at least one polymer (P) with at least 28 wt. % of the at least one additive of formula (I).

11. The method of claim 10, wherein the melt-mixing consists in heating the semi-crystalline polymer (P), along with the additive of formula (I), to a processing temperature (Tp) above the melting temperature (Tm) of the polymer to form a melt.

12. The method of claim 11, wherein the processing temperature (Tp) is at least 15°C greater than the melting temperature (Tm) of the semi-crystalline polymer (P).

13. A porous polymer membrane (M) obtainable by the process of any one of claims 9-12, having an average pore size from about 0.01 micron to about 5.0 micron.

14. Use of the porous polymer membrane (M) of claim 13 in automotive, 5G telecommunication, medical or healthcare.

15. Use of the porous polymer membrane (M) of claim 13, for filtering or purifying fluids, such as liquids or gas.

## Patentansprüche

1. Polymerzusammensetzung (C), umfassend:
- mindestens ein Polyphenylensulfid (PPS);
- mindestens 28 Gew.-%, bezogen auf das Gesamtgewicht der Polymerzusammensetzung (C), mindestens eines Additivs der Formel (I):
Rₐ-Ar-X_{b} (I)
wobei
- Ar für eine aromatische Gruppierung steht und aus der Gruppe bestehend aus einer substituierten oder unsubstituierten, aromatischen monocyclischen oder polycyclischen Gruppe mit 5 bis 18 Kohlenstoffatomen ausgewählt ist;
- R, gleich oder voneinander verschieden, jeweils aus der Gruppe bestehend aus einem Halogen, einem Hydroxyl, einer aliphatischen C1-C18-Gruppe, einer cycloaliphatischen C1-C18-Gruppe und einem C1-C18-Aromaten ausgewählt ist;
- a für null oder eine ganze Zahl von 1 bis 5 steht;
- X für (COO⁻), (M^{p+})_{1/p} steht, worin M^{p+} für ein Metallkation mit einer Wertigkeit von p steht;
- b für eine ganze Zahl von 1 bis 4 steht;
- mindestens ein verstärkender Füllstoff; und
- das mindestens eine Additiv der Formel (I) wasserlöslich ist.

2. Polymerzusammensetzung (C) nach Anspruch 1, wobei Ar in der Formel (I) aus der Gruppe bestehend aus: 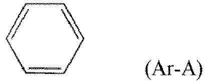 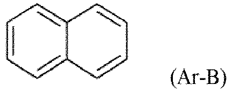 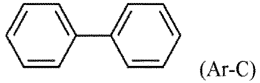 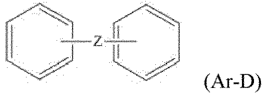 ausgewählt ist, wobei Z für eine zweiwertige Gruppierung steht und aus der Gruppe bestehend aus -SO₂-, -CO- und Alkylenen mit 1 bis 6 Kohlenstoffatomen ausgewählt ist.

3. Polymerzusammensetzung (C) nach einem der Ansprüche 1 bis 2, wobei das Additiv der Formel (II) entspricht: 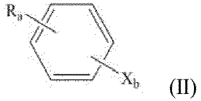 wobei
- R, gleich oder voneinander verschieden, jeweils aus der Gruppe bestehend aus einem Halogen, einem Hydroxyl, einer aliphatischen C1-C18-Gruppe, einer cycloaliphatischen C1-C18-Gruppe und einem C1-C18-Aromaten ausgewählt ist;
- a für null oder eine ganze Zahl von 1 bis 5 steht;
- X für (COO⁻), (M^{p+})_{1/p} steht, worin M^{p+} für ein Metallkation mit einer Wertigkeit von p steht; und
- b entweder für 1 oder für 2 steht.

4. Polymerzusammensetzung (C) nach einem der Ansprüche 1 bis 3, wobei das Additiv-Salz aus der Gruppe bestehend aus Benzoat, Methylbenzoat, Ethylbenzoat, Propylbenzoat und Butylbenzoat ausgewählt ist.

5. Polymerzusammensetzung (C) nach einem der Ansprüche 1 bis 4, die zwischen 30 Gew.-% und 70 Gew.-% des Additivs umfasst.

6. Polymerzusammensetzung (C) nach einem der Ansprüche 1 bis 5, wobei es sich bei dem verstärkenden Füllstoff um einen faserförmigen Füllstoff handelt und die Polymerzusammensetzung den faserförmigen Füllstoff in einer Menge im Bereich von 5 Gew.-% bis 50 Gew.-%, bezogen auf das Gesamtgewicht der Polymerzusammensetzung, enthält.

7. Polymerzusammensetzung (C) nach einem der Ansprüche 1 bis 6, wobei der verstärkende Füllstoff aus der Gruppe bestehend aus Glasfasern, Kohlenstofffasern und Basaltfasern ausgewählt ist.

8. Polymergegenstand (A), der die Polymerzusammensetzung (C) nach einem der Ansprüche 1 bis 7 umfasst.

9. Verfahren zur Bildung einer porösen Polymermembran (M), umfassend:
(i) Herstellen einer Polymerzusammensetzung (C) nach einem der Ansprüche 1 bis 7,
(ii) Verarbeiten der Polymerzusammensetzung (C) zu einer Membran,
(iii) Eintauchen der Membran in Wasser.

10. Verfahren nach Anspruch 9, wobei der Schritt (i) daraus besteht, dass man das mindestens eine Polymer (P) mit mindestens 28 Gew.-% des mindestens einen Additivs der Formel (I) schmelzemischt.

11. Verfahren nach Anspruch 10, wobei das Schmelzemischen darin besteht, dass man das teilkristalline Polymer (P) zusammen mit dem Additiv der Formel (I) auf eine Verarbeitungstemperatur (Tp) oberhalb der Schmelztemperatur (Tm) des Polymers erhitzt, um eine Schmelze zu bilden.

12. Verfahren nach Anspruch 11, wobei die Verarbeitungstemperatur (Tp) mindestens 15 °C größer als die Schmelztemperatur (Tm) des teilkristallinen Polymers (P) ist.

13. Poröse Polymermembran (M), die durch das Verfahren nach einem der Ansprüche 9-12 erhältlich ist und eine durchschnittliche Porengröße von etwa 0,01 Mikron bis etwa 5,0 Mikron aufweist.

14. Verwendung der porösen Polymermembran (M) nach Anspruch 13 im Automobilbereich, in der 5G-Telekommunikation, in der Medizin oder im Gesundheitswesen.

15. Verwendung der porösen Polymermembran (M) nach Anspruch 13 zum Filtern oder Reinigen von Fluiden, wie Flüssigkeiten oder Gas.

## Revendications

1. Composition de polymère (C) comprenant :
- au moins un poly(sulfure de phénylène) (PPS) ;
- au moins 28 % en poids, sur la base du poids total de la composition de polymère (C), d'au moins un additif de formule (I) :
Rₐ-Ar-X_{b} (I)
où
- Ar est un groupement aromatique et est choisi dans le groupe constitué par un groupe monocyclique ou polycyclique aromatique, substitué ou non substitué ayant 5 à 18 atomes de carbone,
- chacun des R, identiques ou différents les uns des autres, est choisi dans le groupe constitué par un halogène, un hydroxyle, un groupe aliphatique en C1-C18, un groupe cycloaliphatique en C1-C18 et un composé aromatique en C1-C18 ;
- a est zéro ou un entier dans la plage de 1 à 5 ;
- X est (COO⁻),(M^{p+})_{1/p} dans lequel M^{p+} est un cation métallique de valence p ;
- b est un entier dans la plage de 1 à 4 ;
- au moins une charge de renforcement ; et
- l'au moins un additif de formule (I) est soluble dans l'eau.

2. Composition de polymère (C) selon la revendication 1, Ar dans la formule (I) étant choisi dans le groupe constitué par : 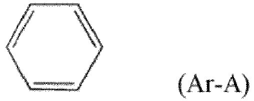 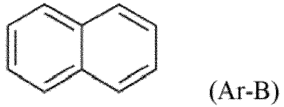 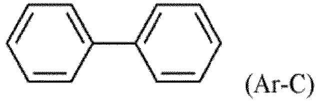 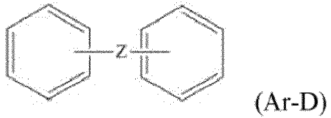 Z étant un groupement divalent et étant choisi dans le groupe constitué par -SO₂-,-CO- et des alkylènes de 1 à 6 atomes de carbone.

3. Composition de polymère (C) selon l'une quelconque des revendications 1 à 2, l'additif étant selon la formule (II) : 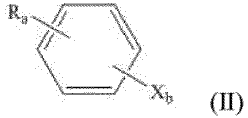 où
- chacun des R, identiques ou différents les uns des autres, est choisi dans le groupe constitué par un halogène, un hydroxyle, un groupe aliphatique en C1-C18, un groupe cycloaliphatique en C1-C18 et un composé aromatique en C1-C18 ;
- a est zéro ou un entier dans la plage de 1 à 5 ;
- X est (COO⁻),(M^{p+})_{1/p} dans lequel M^{p+} est un cation métallique de valence p ; et
- b est chacun parmi soit 1, soit 2.

4. Composition de polymère (C) selon l'une quelconque des revendications 1 à 3, le sel d'additif étant choisi dans le groupe constitué par un benzoate, un méthylbenzoate, un éthylbenzoate, un propylbenzoate et un butylbenzoate.

5. Composition de polymère (C) selon l'une quelconque des revendications 1 à 4, comprenant entre 30 % en poids et 70 % en poids de l'additif.

6. Composition de polymère (C) selon l'une quelconque des revendications 1 à 5, la charge de renforcement étant une charge fibreuse et la composition de polymère comprenant la charge fibreuse en la quantité dans la plage de 5 % en poids à 50 % en poids, sur la base du poids total de la composition de polymère.

7. Composition de polymère (C) selon l'une quelconque des revendications 1 à 6, la charge de renforcement étant choisie dans le groupe constitué par des fibres de verre, les fibres de carbone et des fibres de basalte.

8. Article de polymère (A) comprenant la composition de polymère (C) selon l'une quelconque des revendications 1 à 7.

9. Procédé de formation d'une membrane de polymère poreuse (M), comprenant :
(i) la préparation d'une composition de polymère (C) selon l'une quelconque des revendications 1 à 7,
(ii) la transformation de la composition de polymère (C) en une membrane,
(iii) l'immersion de la membrane dans l'eau.

10. Procédé selon la revendication 9, l'étape (i) consistant en un mélange en fusion de l'au moins un polymère (P) avec au moins 28 % en poids de l'au moins un additif de formule (I).

11. Procédé selon la revendication 10, le mélange en fusion consistant en le chauffage du polymère semi-cristallin (P), ensemble avec l'additif de formule (I), jusqu'à une température de transformation (T_{P}) au-dessus de la température de fusion (Tm) du polymère pour former une masse fondue.

12. Procédé selon la revendication 11, la température de transformation (T_{P}) étant au moins 15 °C supérieure à la température de fusion (Tm) du polymère semi-cristallin (P).

13. Membrane de polymère poreuse (M) pouvant être obtenue par le processus selon l'une quelconque des revendications 9 à 12, ayant une taille moyenne de pores d'environ 0,01 micron à environ 5,0 microns.

14. Utilisation de la membrane de polymère poreuse (M) selon la revendication 13 dans l'automobile, la télécommunication 5G, le médical ou les soins de santé.

15. Utilisation de la membrane de polymère poreuse (M) selon la revendication 13, pour la filtration ou la purification de fluides, tels que des liquides ou des gaz.
